# EUROPEAN PATENT APPLICATION

(11) **EP 4 848 065 A1**
(43) Date of publication of application: **02.12.2026**
(21) Application number: 24920022.1
(22) Date of filing: 31.12.2024
(51) Int. Cl.: G06F 3/14

(54) **CROSS-SCREEN APPLICATION MOVEMENT METHOD AND APPARATUS, AND STORAGE MEDIUM AND ELECTRONIC DEVICE**

(30) Priority: 25.01.2024 CN 202410105382
(71) Applicant: TCL YUXIN ZHIXING TECHNOLOGY (NINGBO) CO., LTD., Ningbo, Zhejiang 315000 (CN)
(72) Inventor: WANG, Binhong, Ningbo, Zhejiang 315000 (CN); DING, Tang, Ningbo, Zhejiang 315000 (CN)
(74) Representative: Petraz, Gilberto Luigi
(86) International application number: PCT/CN2024/144340
(87) International publication number: WO 2025/156944

(57) **Abstract**

The present application relates to the technical field of computers. Disclosed are a cross-screen application movement method and apparatus, and a storage medium and an electronic device. The method comprises: moving an application window in a first screen to a virtual screen; synchronizing, to an animation window, content displayed in the application window in the virtual screen; and closing the animation window and moving the application window in the virtual screen to a second screen. The present application realizes the real-time display of animations in an application window being moved across screens, thereby improving the human-computer interaction experience.

## Description

This application is a US national phase application which claims the priority of Chinese Patent Application No. 202410105382.8, entitled "CROSS-SCREEN APPLICATION MOVEMENT METHOD AND APPARATUS, AND STORAGE MEDIUM AND ELECTRONIC DEVICE", filed on January 25, 2024, the disclosure of which is incorporated herein by reference in its entirety.

### FIELD OF THE INVENTION

The present disclosure relates to the field of computer technologies, and in particular, to a method, an apparatus, a storage medium, and an electronic device for cross-screen movement of an application.

### BACKGROUND

In devices such as intelligent cockpits, multiple physical screens may be present. In order to facilitate user operation of applications among multiple physical screens, a cross-screen movement function of an application has become necessary. To improve human-computer interaction during the cross-screen movement process of the application, animation effects are typically introduced during the cross-screen movement of the application.

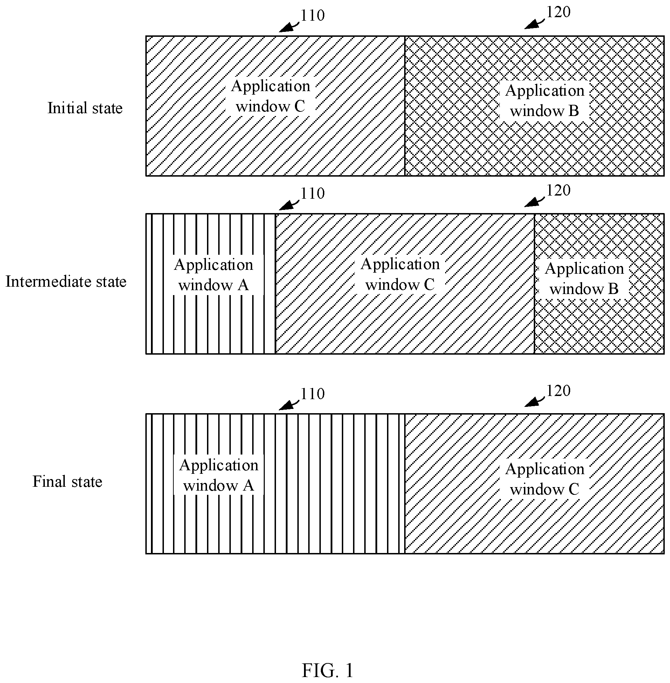

In existing mainstream solutions for cross-screen movement animation effects of an application, after an application window is slid using, for example, a three-finger gesture, a cross-screen movement animation effect of the application is triggered, so as to achieve movement of the application from a first screen to a second screen. However, in existing solutions, if the application window to be moved comprises an animation (that is, the application is in an animation stage), the animation is typically not capable of being displayed in real time. Instead, a static frame (that is, a fixed frame formed by pausing the animation in the application window) is generally used to complete the movement animation effect. For example, as shown in FIG. 1, during movement of an application window C from a first screen 110 to a second screen 120, the application window C being moved displays a static frame and the animation therein is paused. Technical Problem

In the current cross-screen movement process of an application, there exists a problem that an animation in an application window being moved across screens cannot be displayed in real time, and the human-computer interaction experience needs to be further improved.

### SUMMARY

Embodiments of the present disclosure provide a cross-screen movement solution for an application, which enables real-time display of an animation in an application window being moved across screens, thereby effectively improving a human-computer interaction experience during the cross-screen movement process of the application.

Embodiments of the present disclosure provide the following technical solutions.

According to an embodiment of the present disclosure, a method for cross-screen movement of an application is provided, comprising: in response to an operation of moving an application window in a first screen across screens to a second screen, creating a virtual screen, and moving the application window to the virtual screen; creating an animation window in a target screen of the first screen and the second screen; synchronously updating content displayed in the application window in the virtual screen to the animation window; and in response to detecting that a predetermined movement timing condition is satisfied, closing the animation window, and moving the application window in the virtual screen to the second screen.

In some embodiments of the present disclosure, before closing the animation window in response to detecting that the predetermined movement timing condition is satisfied, the method further comprises: detecting whether an animation in the animation window has finished playing, wherein the content comprises the animation; and in response to the animation having finished playing, determining that the predetermined movement timing condition is satisfied.

In some embodiments of the present disclosure, before closing the animation window in response to detecting that the predetermined movement timing condition is satisfied, the method further comprises: detecting whether an animation in the animation window has been played for a predetermined duration, wherein the content comprises the animation; and in response to the animation having been played for the predetermined duration, determining that the predetermined movement timing condition is satisfied.

In some embodiments of the present disclosure, the creating the virtual screen in response to the operation of moving the application window in the first screen across screens to the second screen comprises: detecting whether content displayed in the application window comprises an animation; and in response to the content comprising the animation, creating the virtual screen.

In some embodiments of the present disclosure, the creating the virtual screen comprises: determining a target number of animation windows to be created; and creating a plurality of virtual screens according to the target number, each of the plurality of virtual screens corresponding to one of the animation windows, wherein a content synchronization time difference is set among the plurality of virtual screens.

In some embodiments of the present disclosure, one animation window is created in each of the first screen and the second screen; and the synchronously updating the content displayed in the application window in the virtual screen to the animation window comprises: obtaining the content displayed in the application window in the virtual screen; and simultaneously synchronously updating the content to the animation window in each of the first screen and the second screen.

In some embodiments of the present disclosure, the synchronously updating the content displayed in the application window in the virtual screen to the animation window comprises: obtaining content displayed in the application window in each of the plurality of virtual screens to obtain content corresponding to each virtual screen; and synchronously updating the content corresponding to each virtual screen to the animation window corresponding to each virtual screen according to the content synchronization time difference.

In some embodiments of the present disclosure, the creating the animation window in the target screen of the first screen and the second screen comprises one of the following: creating one animation window in each of the first screen and the second screen; or selecting the target screen from the first screen and the second screen based on screen display content of the first screen and the second screen and window display content of the application window, and creating the animation window in the target screen.

In some embodiments of the present disclosure, the selecting the target screen from the first screen and the second screen comprises: detecting a difference between the screen display content of each of the first screen and the second screen and the window display content; and selecting a screen having the difference greater than a predetermined threshold as the target screen.

According to an embodiment of the present disclosure, an apparatus for cross-screen movement of an application is provided, comprising: a first creation module, configured to: in response to an operation of moving an application window in a first screen across screens to a second screen, create a virtual screen, and move the application window to the virtual screen; a second creation module, configured to: create an animation window in a target screen of the first screen and the second screen; a synchronization update module, configured to: synchronously update content displayed in the application window in the virtual screen to the animation window; and a window movement module, configured to: in response to detecting that a predetermined movement timing condition is satisfied, close the animation window, and move the application window in the virtual screen to the second screen.

In some embodiments of the present disclosure, before closing the animation window in response to detecting that the predetermined movement timing condition is satisfied, the apparatus further comprises: a first determination module, configured to: detect whether an animation in the animation window has finished playing, wherein the content comprises the animation; and in response to the animation having finished playing, determine that the predetermined movement timing condition is satisfied.

In some embodiments of the present disclosure, before closing the animation window in response to detecting that the predetermined movement timing condition is satisfied, the apparatus further comprises: a second determination module, configured to: detect whether an animation in the animation window has been played for a predetermined duration, wherein the content comprises the animation; and in response to the animation having been played for the predetermined duration, determine that the predetermined movement timing condition is satisfied.

In some embodiments of the present disclosure, the first creation module is further configured to: in response to the operation of moving the application window in the first screen across screens to the second screen, detect whether content displayed in the application window comprises an animation; and in response to the content comprising the animation, create the virtual screen.

In some embodiments of the present disclosure, the first creation module is further configured to: determine a target number of animation windows to be created; and create a plurality of virtual screens according to the target number, each of the plurality of virtual screens corresponding to one of the animation windows, wherein a content synchronization time difference is set among the plurality of virtual screens.

In some embodiments of the present disclosure, one animation window is created in each of the first screen and the second screen; and the synchronization update module is configured to: obtain the content displayed in the application window in the virtual screen; and simultaneously synchronously update the content to the animation window in each of the first screen and the second screen.

In some embodiments of the present disclosure, the synchronization update module is further configured to: obtain content displayed in the application window in each of the plurality of virtual screens to obtain content corresponding to each virtual screen; and synchronously update the content corresponding to each virtual screen to the animation window corresponding to each virtual screen according to the content synchronization time difference.

In some embodiments of the present disclosure, the second creation module is configured to implement one of the following: creating one animation window in each of the first screen and the second screen; or selecting the target screen from the first screen and the second screen based on screen display content of the first screen and the second screen and window display content of the application window, and creating the animation window in the target screen.

In some embodiments of the present disclosure, the second creation module is further configured to: detect a difference between the screen display content of each of the first screen and the second screen and the window display content; and select a screen having the difference greater than a predetermined threshold as the target screen.

According to another embodiment of the present disclosure, a storage medium is provided, having stored thereon a computer program, wherein, when the computer program is executed by a processor of a computer, the computer is caused to perform the method provided in the embodiments of the present disclosure.

According to another embodiment of the present disclosure, an electronic device is provided, comprising:a memory, storing a computer program; and a processor, configured to read the computer program stored in the memory and execute the method provided in the embodiments of the present disclosure.

According to another embodiment of the present disclosure, a computer program product or a computer program is provided, the computer program product or the computer program comprising computer instructions stored in a computer-readable storage medium. A processor of a computer device reads the computer instructions from the computer-readable storage medium and executes the computer instructions, such that the computer device performs the method provided in various optional implementations of the embodiments of the present disclosure.

### Advantageous Effects

In embodiments of the present disclosure, in response to an operation of moving an application window in a first screen across screens to a second screen, a virtual screen is created, and the application window is moved to the virtual screen; an animation window is created in a target screen of the first screen and the second screen; content displayed in the application window in the virtual screen is synchronously updated to the animation window; and in response to detecting that a predetermined movement timing condition is satisfied, the animation window is closed, and the application window in the virtual screen is moved to the second screen.

In this manner, during a process in which the application window is moved from the first screen to the second screen, the application window is carried by the virtual screen, and the animation window is created in the target screen of the first screen and the second screen to enable real-time synchronous display of the content displayed in the application window in the virtual screen. When the content comprises an animation, the animation can be synchronously displayed in real time in the target screen, such that the animation in the application window is not paused but dynamically played during the movement process. After the predetermined movement timing condition is satisfied, the animation window is closed and the application window is moved to the second screen, thereby completing the cross-screen movement of the application. Throughout the entire process, real-time display of the animation in the application window being moved across screens can be achieved, thereby effectively improving the human-computer interaction experience during the cross-screen movement process of the application.

### BRIEF DESCRIPTION OF THE DRAWINGS

In order to more clearly illustrate the technical solutions in the embodiments of the present disclosure, the drawings required for describing the embodiments will be briefly introduced below. It should be apparent that the drawings described below are merely some embodiments of the present disclosure, and those skilled in the art may obtain other drawings based on these drawings without inventive effort.
FIG. 1 illustrates a schematic diagram of a conventional cross-screen movement process of an application.
FIG. 2 illustrates a flowchart of a method for cross-screen movement of an application according to an embodiment of the present disclosure.
FIG. 3 illustrates a schematic diagram of a cross-screen movement process of an application according to an embodiment of the present disclosure.
FIG. 4 illustrates a block diagram of an apparatus for cross-screen movement of an application according to an embodiment of the present disclosure.
FIG. 5 illustrates a block diagram of an electronic device according to an embodiment of the present disclosure.

### DESCRIPTION OF THE EMBODIMENTS

The present disclosure will be further described in detail below with reference to the accompanying drawings and embodiments. It should be understood that the embodiments provided herein are merely used to explain the present disclosure, and are not intended to limit the present disclosure. In addition, the embodiments provided below are only some embodiments for implementing the present disclosure, rather than all embodiments for implementing the present disclosure. The technical solutions described in the embodiments of the present disclosure may be implemented in any combination, provided that no conflict exists.

It should be noted that, in the embodiments of the present disclosure, the terms "comprise," "comprising," or any other variations thereof are intended to cover non-exclusive inclusion, such that a method or an apparatus comprising a series of elements not only includes those elements explicitly listed, but also includes other elements not explicitly listed, or elements inherent to the method or apparatus. Without further limitation, an element defined by the phrase "comprising a/an ..." does not exclude the presence of additional related elements in the method or apparatus that includes the element (for example, steps in the method or units in the apparatus, where such units may include partial circuits, partial processors, partial programs or software, and the like).

For example, the method for cross-screen movement of an application provided in the embodiments of the present disclosure comprises a series of steps, but is not limited to the steps described herein. Similarly, the apparatus for cross-screen movement of an application provided in the embodiments of the present disclosure comprises a series of modules, but is not limited to the modules explicitly described, and may further include modules required for obtaining relevant information or processing information.

Unless otherwise defined, all technical and scientific terms used herein have the same meanings as commonly understood by those skilled in the technical field of the present disclosure. The terms used herein are only for the purpose of describing specific embodiments and are not intended to limit the present disclosure.

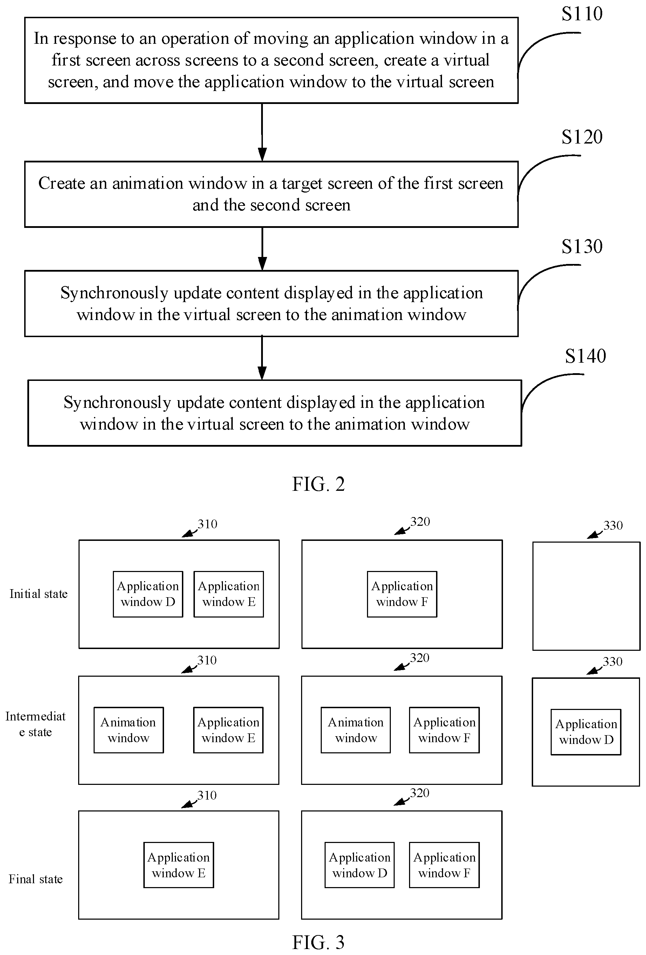

FIG. 2 schematically illustrates a flowchart of a method for cross-screen movement of an application according to an embodiment of the present disclosure. An execution subject of the method may be any device having processing capability. The device may be configured with at least two physical screens, including a first screen and a second screen. For example, the device may be a device in an intelligent cockpit, a mobile phone, or the like.

As shown in FIG. 2, the method for cross-screen movement of an application may comprise steps S110 to S140.

Step S110: in response to an operation of moving an application window in a first screen across screens to a second screen, create a virtual screen, and move the application window to the virtual screen; Step S120: create an animation window in a target screen of the first screen and the second screen; Step S130: synchronously update content displayed in the application window in the virtual screen to the animation window; and Step S140: in response to detecting that a predetermined movement timing condition is satisfied, close the animation window, and move the application window in the virtual screen to the second screen.

The operation of moving the application window in the first screen across screens to the second screen may be set according to actual requirements. For example, the operation may be a three-finger sliding operation, a two-finger sliding operation, a control pressing operation, or the like. The application window may be used to display content of an application.

In response to the operation, a virtual screen is first created. The virtual screen is an additional virtual screen other than the first screen and the second screen, and the virtual screen may not need to be displayed. The application window to be moved is temporarily moved to the virtual screen. For example, an interface such as createVirtualDisplay may be used to create the virtual screen, and an interface such as ActivityTaskManager may be used to move the application window to the virtual screen.

Referring to FIG. 3, in one example, in response to the operation of moving an application window D in a first screen 310 across screens to a second screen 320, a virtual screen 330 is first created, and then the application window D is temporarily moved to the virtual screen 330.

Further, an animation window is created in a target screen of the first screen and the second screen. For example, an interface such as WindowManager.addView may be used to create the animation window. As shown in FIG. 3, in one example, both the first screen and the second screen are respectively used as the target screen, and an animation window is respectively created therein. It should be understood that, in other embodiments, one of the first screen and the second screen may be selected as the target screen.

Further, content displayed in the application window in the virtual screen may be obtained in real time, and the content displayed in the application window in the virtual screen is synchronously updated to the animation window. When the content comprises an animation, the animation may be dynamically played in the animation window.

Further, in response to detecting that the predetermined movement timing condition is satisfied, the animation window in the target screen is closed, and the application window in the virtual screen is moved to the second screen, thereby completing the cross-screen movement of the application. As shown in FIG. 3, in one example, after the application window D in the virtual screen is moved to the second screen 320, the virtual screen may be closed. Meanwhile, the animation windows in the first screen 310 and the second screen 320 are closed, and the application window D is fully displayed in the second screen 320.

In this manner, based on steps S110 to S140, during a process in which the application window is moved from the first screen to the second screen, the application window is carried by the virtual screen, and the animation window is created in the target screen of the first screen and the second screen to enable real-time synchronous display of the content displayed in the application window in the virtual screen. When the content comprises an animation, the animation can be synchronously displayed in real time in the target screen, such that the animation in the application window is not paused but dynamically played during the movement process. After the predetermined movement timing condition is satisfied, the animation window is closed and the application window is moved to the second screen, thereby completing the cross-screen movement of the application. Throughout the entire process, real-time display of the animation in the application window being moved across screens can be achieved, thereby effectively improving the human-computer interaction experience during the cross-screen movement process of the application.

Further optional specific embodiments under each of the above steps when performing cross-screen movement of an application according to the embodiment of FIG. 1 are described below.

In one embodiment, the creating the virtual screen in response to the operation of moving the application window in the first screen across screens to the second screen may comprise: in response to the operation, directly creating the virtual screen without detecting whether an animation is present, so that the virtual screen may be quickly created to carry the application window.

Further, in one embodiment, the creating the virtual screen in response to the operation of moving the application window in the first screen across screens to the second screen may comprise: detecting whether content displayed in the application window comprises an animation; and in response to the content comprising the animation, creating the virtual screen.

In this embodiment, in response to the operation, whether content displayed in the application window comprises an animation is first detected. If the animation is present, the virtual screen is created; otherwise, if the animation is not present, the virtual screen is not created.

Accordingly, the virtual screen may be created only in a scenario where the animation needs to be played, so as to carry the application window and further enable dynamic playback of the animation. In a case where no animation is present and the virtual screen is not created, cross-screen movement of the application may be performed according to a conventional approach.

Thus, unnecessary virtual screen creation tasks may be avoided. Compared with a solution that does not distinguish whether an animation is present, device performance during the cross-screen movement process of the application can be further improved.

In one embodiment, the creating the virtual screen may comprise: creating a number of virtual screens corresponding to a number of application windows to be moved. For example, when only one application window is moved at a time, only one virtual screen is created.

In one embodiment, the creating the virtual screen may comprise: determining a target number of animation windows to be created; and creating a plurality of virtual screens according to the target number, each of the plurality of virtual screens corresponding to one of the animation windows, wherein a content synchronization time difference is set among the plurality of virtual screens.

In this embodiment, the target number of animation windows to be created is first determined, that is, how many animation windows need to be created is determined. Then, the plurality of virtual screens are created according to the target number, each of the plurality of virtual screens corresponding to one animation window. For example, when the target number is 2, two virtual screens are created, and each virtual screen corresponds to one animation window.

Further, the content synchronization time difference is set among the plurality of virtual screens. The content synchronization time difference specifically refers to a time difference for synchronously updating the content in each virtual screen to a corresponding animation window. For example, a content synchronization time difference of 0.5 seconds may be set between a first virtual screen and a second virtual screen. A first frame of content X in the first virtual screen may be synchronously updated to a corresponding animation window 1 at 1 second, while the same first frame of content X in the second virtual screen may be synchronously updated to a corresponding animation window 2 at 1.5 seconds.

In this way, comparative playback of preceding and subsequent frames may be formed among different animation windows, thereby further improving animation playback effects during the cross-screen movement process of the application and further improving the human-computer interaction experience. The content synchronization time difference may be set according to specific conditions.

It should be understood that, in other embodiments, when a plurality of virtual screens are created, no content synchronization time difference may be set among the plurality of virtual screens.

In one embodiment, the creating the animation window in the target screen of the first screen and the second screen may comprise one of the following: a first manner, creating one animation window in each of the first screen and the second screen; or a second manner, selecting the target screen from the first screen and the second screen based on screen display content of the first screen and the second screen and window display content of the application window, and creating the animation window in the target screen.

In the first manner, as shown in FIG. 3, one animation window is respectively created in each of the first screen and the second screen. In this way, during the cross-screen movement process of the application, the animation in the application window may be displayed in both the first screen and the second screen, thereby greatly ensuring animation playback effects.

In the second manner, the target screen is selected from the first screen and the second screen based on the screen display content of the first screen and the second screen and the window display content of the application window, and the animation window is created in the target screen. The target screen may be one of the first screen and the second screen or both.

By selecting the target screen based on the screen display content and the window display content, the target screen may be one or both of the first screen and the second screen. In some scenarios, it is possible to avoid using both the first screen and the second screen as the target screen, thereby avoiding redundant animation playback or poor animation playback experience.

In some embodiments, the selecting the target screen from the first screen and the second screen based on the screen display content of the first screen and the second screen and the window display content of the application window may specifically comprise: detecting a difference between the screen display content of each of the first screen and the second screen and the window display content; and selecting a screen having the difference greater than a predetermined threshold as the target screen.

The screen display content of the first screen refers to content displayed in the first screen after removing the application window to be moved. For example, the screen display content of the first screen may be content in an application window E shown in FIG. 3. The screen display content of the second screen refers to content displayed in an application window in the second screen. For example, the screen display content of the second screen may be content in an application window F shown in FIG. 3.

A difference between the screen display content of the first screen and the window display content is compared to obtain a first difference; a difference between the screen display content of the second screen and the window display content is compared to obtain a second difference. A screen having the difference greater than a predetermined threshold is selected as the target screen. For example, when the first difference is greater than the predetermined threshold, the first screen is selected as the target screen; and when the second difference is greater than the predetermined threshold, the second screen is selected as the target screen. In this way, the animation in the application window being moved is displayed only in a screen having sufficient display difference from the application window being moved.

In one embodiment, one animation window is created in each of the first screen and the second screen; and the synchronously updating the content displayed in the application window in the virtual screen to the animation window may comprise: obtaining the content displayed in the application window in the virtual screen; and simultaneously synchronously updating the content to the animation window in each of the first screen and the second screen.

In this embodiment, one virtual screen is created, and the content displayed in the application window in the virtual screen is synchronously updated to the animation windows in the first screen and the second screen, respectively. That is, the animation windows in the first screen and the second screen display the same animation frame at the same time.

In one embodiment, the synchronously updating the content displayed in the application window in the virtual screen to the animation window may comprise: obtaining content displayed in the application window in each of the plurality of virtual screens to obtain content corresponding to each virtual screen; and synchronously updating the content corresponding to each virtual screen to the animation window corresponding to each virtual screen according to the content synchronization time difference.

A content synchronization time difference is set among the plurality of virtual screens. The content synchronization time difference specifically refers to a time difference for synchronously updating the content in each virtual screen to a corresponding animation window. For example, a content synchronization time difference of 0.5 seconds may be set between a first virtual screen and a second virtual screen. A first frame of content X in the first virtual screen may be synchronously updated to a corresponding animation window 1 at 1 second, while the same first frame of content X in the second virtual screen may be synchronously updated to a corresponding animation window 2 at 1.5 seconds. In this way, comparative playback of preceding and subsequent frames may be formed among different animation windows, thereby further improving animation playback effects during the cross-screen movement process of the application and further improving the human-computer interaction experience.

In one embodiment, before closing the animation window in response to detecting that the predetermined movement timing condition is satisfied, the method may further comprise: detecting whether an animation in the animation window has finished playing, wherein the content comprises the animation; and in response to the animation having finished playing, determining that the predetermined movement timing condition is satisfied.

If the content synchronously updated in the animation window comprises an animation, it is detected whether the animation has finished playing. If the animation has finished playing, it is determined that the predetermined movement timing condition is satisfied; otherwise, if the animation has not finished playing, it is determined that the predetermined movement timing condition is not satisfied.

Accordingly, in this embodiment, when the animation finishes playing, the application window in the virtual screen may be moved to the second screen, and the animation window and the virtual screen may be closed. In this way, complete playback of the animation is ensured, thereby greatly improving the interaction experience of cross-screen movement of the application.

In one embodiment, before closing the animation window in response to detecting that the predetermined movement timing condition is satisfied, the method further comprises: detecting whether an animation in the animation window has been played for a predetermined duration, wherein the content comprises the animation; and in response to the animation having been played for the predetermined duration, determining that the predetermined movement timing condition is satisfied.

If the content synchronously updated in the animation window comprises an animation, it is detected whether the animation has reached a predetermined duration. If the predetermined duration is reached, it is determined that the predetermined movement timing condition is satisfied; otherwise, if the predetermined duration is not reached, it is determined that the predetermined movement timing condition is not satisfied. The predetermined duration may be set according to actual requirements, and is not specifically limited in the present disclosure.

Accordingly, in this embodiment, when the animation has been played for the predetermined duration, the application window in the virtual screen may be moved to the second screen, and the animation window and the virtual screen may be closed. In this way, excessive system processing pressure caused by overly long animation playback may be avoided, and the interaction experience of cross-screen movement of the application can be improved to a certain extent while ensuring device performance.

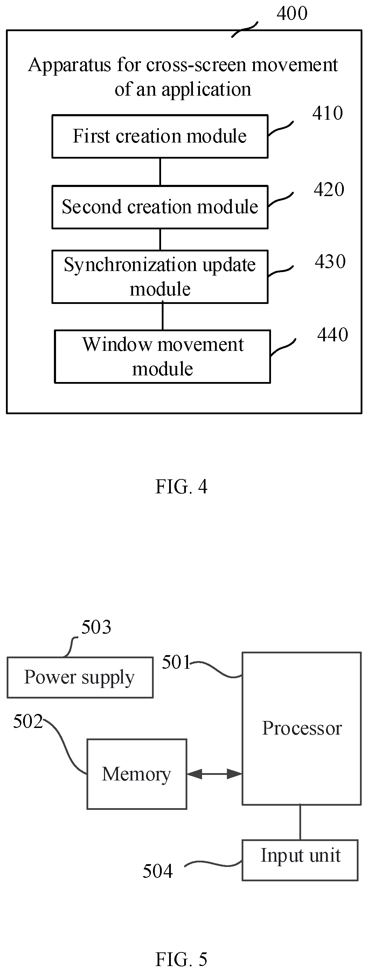

In order to facilitate better implementation of the method for cross-screen movement of an application provided in the embodiments of the present disclosure, an apparatus for cross-screen movement of an application based on the above method is further provided. Terms used herein have the same meanings as those in the method for cross-screen movement of an application described above, and specific implementation details may refer to the descriptions in the method embodiments. FIG. 4 illustrates a block diagram of an apparatus for cross-screen movement of an application according to an embodiment of the present disclosure.

As shown in FIG. 4, an apparatus 400 for cross-screen movement of an application may comprise: a first creation module 410, configured to: in response to an operation of moving an application window in a first screen across screens to a second screen, create a virtual screen, and move the application window to the virtual screen; a second creation module 420, configured to: create an animation window in a target screen of the first screen and the second screen; a synchronization update module 430, configured to: synchronously update content displayed in the application window in the virtual screen to the animation window; and a window movement module 440, configured to: in response to detecting that a predetermined movement timing condition is satisfied, close the animation window, and move the application window in the virtual screen to the second screen.

In some embodiments of the present disclosure, before closing the animation window in response to detecting that the predetermined movement timing condition is satisfied, the apparatus further comprises: a first determination module, configured to: detect whether an animation in the animation window has finished playing, wherein the content comprises the animation; and in response to the animation having finished playing, determine that the predetermined movement timing condition is satisfied.

In some embodiments of the present disclosure, before closing the animation window in response to detecting that the predetermined movement timing condition is satisfied, the apparatus further comprises: a second determination module, configured to: detect whether an animation in the animation window has been played for a predetermined duration, wherein the content comprises the animation; and in response to the animation having been played for the predetermined duration, determine that the predetermined movement timing condition is satisfied.

In some embodiments of the present disclosure, the first creation module is further configured to: in response to the operation of moving the application window in the first screen across screens to the second screen, detect whether content displayed in the application window comprises an animation; and in response to the content comprising the animation, create the virtual screen.

In some embodiments of the present disclosure, the first creation module is further configured to: determine a target number of animation windows to be created; and create a plurality of virtual screens according to the target number, each of the plurality of virtual screens corresponding to one of the animation windows, wherein a content synchronization time difference is set among the plurality of virtual screens.

In some embodiments of the present disclosure, one animation window is created in each of the first screen and the second screen; and the synchronization update module is configured to: obtain the content displayed in the application window in the virtual screen; and simultaneously synchronously update the content to the animation window in each of the first screen and the second screen.

In some embodiments of the present disclosure, the synchronization update module is configured to: obtain content displayed in the application window in each of the plurality of virtual screens to obtain content corresponding to each virtual screen; and synchronously update the content corresponding to each virtual screen to the animation window corresponding to each virtual screen according to the content synchronization time difference.

In some embodiments of the present disclosure, the second creation module is configured to implement one of the following: creating one animation window in each of the first screen and the second screen; or selecting the target screen from the first screen and the second screen based on screen display content of the first screen and the second screen and window display content of the application window, and creating the animation window in the target screen.

In some embodiments of the present disclosure, the second creation module is further configured to: detect a difference between the screen display content of each of the first screen and the second screen and the window display content; and select a screen having the difference greater than a predetermined threshold as the target screen.

It should be noted that, although several modules or units for performing actions are described in detail above, such division is not mandatory. In fact, according to the embodiments of the present disclosure, features and functions of two or more modules or units described above may be embodied in a single module or unit. Conversely, features and functions of one module or unit described above may be further divided and embodied by a plurality of modules or units.

In addition, embodiments of the present disclosure further provide an electronic device. As shown in FIG. 5, FIG. 5 illustrates a block diagram of an electronic device according to an embodiment of the present disclosure. Specifically:

The electronic device may comprise a processor 501 having one or more processing cores, a memory 502 including one or more computer-readable storage media, a power supply 503, and an input unit 504, among other components. Those skilled in the art may understand that the structure of the electronic device shown in FIG. 5 does not constitute a limitation on the electronic device, and the electronic device may include more or fewer components than those illustrated, or may combine certain components, or may have different component arrangements.

The processor 501 is a control center of the electronic device, and is connected to various parts of the electronic device through various interfaces and lines. By running or executing software programs and/or modules stored in the memory 502, and invoking data stored in the memory 502, the processor 501 performs various functions and data processing of the electronic device, thereby performing overall monitoring of the electronic device. Optionally, the processor 501 may comprise one or more processing cores. Preferably, the processor 501 may integrate an application processor and a modem processor, wherein the application processor mainly processes an operating system, user interfaces, and application programs, and the modem processor mainly processes wireless communications. It should be understood that the above modem processor may also not be integrated into the processor 501.

The memory 502 may be used to store software programs and modules. The processor 501 executes various functional applications and data processing by running the software programs and modules stored in the memory 502. The memory 502 may mainly comprise a program storage area and a data storage area. The program storage area may store an operating system and application programs required for at least one function (such as a sound playback function, an image playback function, etc.), and the data storage area may store data created according to the use of the electronic device. In addition, the memory 502 may include a high-speed random access memory and may also include a non-volatile memory, such as at least one disk storage device, a flash memory device, or another non-volatile solid-state storage device. Accordingly, the memory 502 may further include a memory controller to provide the processor 501 with access to the memory 502.

The electronic device further comprises a power supply 503 configured to supply power to various components. Preferably, the power supply 503 may be logically connected to the processor 501 through a power management system, so as to implement functions such as charging management, discharging management, and power consumption management through the power management system. The power supply 503 may further comprise one or more direct current (DC) or alternating current (AC) power sources, a rechargeable system, a power failure detection circuit, a power converter or inverter, a power status indicator, and any other components.

The electronic device may further comprise an input unit 504, which may be configured to receive input digital or character information, and generate signal inputs related to user settings and function control, such as signals from a keyboard, a mouse, a joystick, optical input devices, or a trackball.

Although not shown, the electronic device may further comprise a display unit and the like, which will not be described in detail herein. Specifically, in the present embodiment, the processor 501 in the electronic device loads executable files corresponding to processes of one or more computer programs into the memory 502 according to instructions, and executes the computer programs stored in the memory 502, thereby implementing various functions described in the foregoing embodiments of the present disclosure. For example, the processor 501 may execute the following steps:

in response to an operation of moving an application window in a first screen across screens to a second screen, create a virtual screen, and move the application window to the virtual screen; create an animation window in a target screen of the first screen and the second screen; synchronously update content displayed in the application window in the virtual screen to the animation window; and in response to detecting that a predetermined movement timing condition is satisfied, close the animation window, and move the application window in the virtual screen to the second screen.

In some embodiments of the present disclosure, before closing the animation window in response to detecting that the predetermined movement timing condition is satisfied, the method further comprises: detecting whether an animation in the animation window has finished playing, wherein the content comprises the animation; and in response to the animation having finished playing, determining that the predetermined movement timing condition is satisfied.

In some embodiments of the present disclosure, before closing the animation window in response to detecting that the predetermined movement timing condition is satisfied, the method further comprises: detecting whether an animation in the animation window has been played for a predetermined duration, wherein the content comprises the animation; and in response to the animation having been played for the predetermined duration, determining that the predetermined movement timing condition is satisfied.

In some embodiments of the present disclosure, the creating the virtual screen in response to the operation of moving the application window in the first screen across screens to the second screen comprises: detecting whether content displayed in the application window comprises an animation; and in response to the content comprising the animation, creating the virtual screen.

In some embodiments of the present disclosure, the creating the virtual screen comprises: determining a target number of animation windows to be created; and creating a plurality of virtual screens according to the target number, each of the plurality of virtual screens corresponding to one of the animation windows, wherein a content synchronization time difference is set among the plurality of virtual screens.

In some embodiments of the present disclosure, one animation window is created in each of the first screen and the second screen; and the synchronously updating the content displayed in the application window in the virtual screen to the animation window comprises: obtaining the content displayed in the application window in the virtual screen; and
simultaneously synchronously updating the content to the animation window in each of the first screen and the second screen.

In some embodiments of the present disclosure, the synchronously updating the content displayed in the application window in the virtual screen to the animation window comprises: obtaining content displayed in the application window in each of the plurality of virtual screens to obtain content corresponding to each virtual screen; and synchronously updating the content corresponding to each virtual screen to the animation window corresponding to each virtual screen according to the content synchronization time difference.

In some embodiments of the present disclosure, the creating the animation window in the target screen of the first screen and the second screen comprises one of the following: creating one animation window in each of the first screen and the second screen; or selecting the target screen from the first screen and the second screen based on screen display content of the first screen and the second screen and window display content of the application window, and creating the animation window in the target screen.

In some embodiments of the present disclosure, the selecting the target screen from the first screen and the second screen based on the screen display content of the first screen and the second screen and the window display content of the application window comprises: detecting a difference between the screen display content of each of the first screen and the second screen and the window display content; and selecting a screen having the difference greater than a predetermined threshold as the target screen.

Those skilled in the art may understand that all or part of the steps in the various methods described in the foregoing embodiments may be implemented by a computer program, or may be implemented by controlling related hardware through a computer program. The computer program may be stored in a computer-readable storage medium and may be loaded and executed by a processor.

Accordingly, embodiments of the present disclosure further provide a storage medium having stored thereon a computer program, wherein the computer program is capable of being loaded by a processor to execute the steps of any one of the methods provided in the embodiments of the present disclosure.

The storage medium may be a computer-readable storage medium, and may include: a read-only memory (ROM), a random access memory (RAM), a magnetic disk, an optical disk, or the like.

Since the computer program stored in the storage medium can execute the steps of any one of the methods provided in the embodiments of the present disclosure, the beneficial effects that can be achieved by the methods provided in the embodiments of the present disclosure may also be achieved. For details, reference may be made to the foregoing embodiments, and will not be repeated herein.

After considering the specification and practicing the embodiments disclosed herein, those skilled in the art will readily conceive of other embodiments of the present disclosure. The present disclosure is intended to cover any variations, uses, or adaptations of the present disclosure that follow the general principles of the present disclosure and include common general knowledge or conventional technical means in the technical field not disclosed herein.

It should be understood that the present disclosure is not limited to the embodiments described above and illustrated in the drawings, and various modifications and changes may be made without departing from the scope of the present disclosure.

## Claims

1. A method for cross-screen movement of an application, comprising:
in response to an operation of moving an application window in a first screen across screens to a second screen, creating a virtual screen, and moving the application window to the virtual screen;
creating an animation window in a target screen of the first screen and the second screen;
synchronously updating content displayed in the application window in the virtual screen to the animation window; and
in response to detecting that a predetermined movement timing condition is satisfied, closing the animation window, and moving the application window in the virtual screen to the second screen.

2. The method according to claim 1, wherein, before closing the animation window in response to detecting that the predetermined movement timing condition is satisfied, the method further comprises:
detecting whether an animation in the animation window has finished playing, wherein the content comprises the animation; and
in response to the animation having finished playing, determining that the predetermined movement timing condition is satisfied.

3. The method according to claim 1, wherein, before closing the animation window in response to detecting that the predetermined movement timing condition is satisfied, the method further comprises:
detecting whether an animation in the animation window has been played for a predetermined duration, wherein the content comprises the animation; and
in response to the animation having been played for the predetermined duration, determining that the predetermined movement timing condition is satisfied.

4. The method according to claim 1, wherein the creating the virtual screen in response to the operation of moving the application window across screens from the first screen to the second screen comprises:
detecting whether content displayed in the application window comprises an animation; and
in response to the content comprising the animation, creating the virtual screen.

5. The method according to claim 1, wherein the creating the virtual screen comprises:
determining a target number of animation windows to be created; and
creating a plurality of virtual screens according to the target number, each of the plurality of virtual screens corresponding to one of the animation windows, wherein a content synchronization time difference is set among the plurality of virtual screens.

6. The method according to claim 1, wherein one animation window is created in each of the first screen and the second screen; and the synchronously updating the content displayed in the application window in the virtual screen to the animation window comprises:
obtaining the content displayed in the application window in the virtual screen; and
simultaneously synchronously updating the content to the animation window in each of the first screen and the second screen.

7. The method according to claim 5, wherein the synchronously updating the content displayed in the application window in the virtual screen to the animation window comprises:
obtaining content displayed in the application window in each of the plurality of virtual screens to obtain content corresponding to each virtual screen; and
synchronously updating the content corresponding to each virtual screen to the animation window corresponding to each virtual screen according to the content synchronization time difference.

8. The method according to claim 1, wherein the creating the animation window in the target screen of the first screen and the second screen comprises one of the following:
creating one animation window in each of the first screen and the second screen; or
selecting the target screen from the first screen and the second screen based on screen display content of the first screen and the second screen and window display content of the application window, and creating the animation window in the target screen.

9. The method according to claim 8, wherein the selecting the target screen from the first screen and the second screen comprises:
detecting a difference between the screen display content of each of the first screen and the second screen and the window display content; and
selecting a screen having the difference greater than a predetermined threshold as the target screen.

10. The method according to claim 1, wherein, after moving the application window in the virtual screen to the second screen, the method further comprises: closing the virtual screen.

11. The method according to claim 1, wherein the creating the virtual screen comprises: creating virtual screens corresponding to a number of application windows to be moved.

12. The method according to claim 1, wherein the creating the virtual screen in response to the operation of moving the application window across screens from the first screen to the second screen comprises: directly creating the virtual screen without detecting whether an animation is present.

13. The method according to claim 9, wherein the detecting the difference between the screen display content of each of the first screen and the second screen and the window display content comprises:
comparing the screen display content of the first screen with the window display content to obtain a first difference, and comparing the screen display content of the second screen with the window display content to obtain a second difference; and
the selecting a screen having the difference greater than the predetermined threshold as the target screen comprises:
selecting, from the first screen and the second screen, a screen having the difference greater than the predetermined threshold as the target screen based on the first difference and the second difference.

14. An apparatus for cross-screen movement of an application, comprising:
a first creation module, configured to: in response to an operation of moving an application window in a first screen across screens to a second screen, create a virtual screen, and move the application window to the virtual screen;
a second creation module, configured to: create an animation window in a target screen of the first screen and the second screen;
a synchronization update module, configured to: synchronously update content displayed in the application window in the virtual screen to the animation window; and
a window movement module, configured to: in response to detecting that a predetermined movement timing condition is satisfied, close the animation window, and move the application window in the virtual screen to the second screen.

15. The apparatus according to claim 14, wherein, before the window movement module closes the animation window in response to detecting that the predetermined movement timing condition is satisfied, the apparatus further comprises:
a first determination module, configured to: detect whether an animation in the animation window has finished playing, wherein the content comprises the animation; and
in response to the animation having finished playing, determine that the predetermined movement timing condition is satisfied.

16. The apparatus according to claim 14, wherein, before the window movement module closes the animation window in response to detecting that the predetermined movement timing condition is satisfied, the apparatus further comprises:
a second determination module, configured to: detect whether an animation in the animation window has been played for a predetermined duration, wherein the content comprises the animation; and
in response to the animation having been played for the predetermined duration, determine that the predetermined movement timing condition is satisfied.

17. The apparatus according to claim 14, wherein the first creation module is further configured to:
in response to the operation of moving the application window in the first screen across screens to the second screen, detect whether content displayed in the application window comprises an animation; and
in response to the content comprising the animation, create the virtual screen.

18. The apparatus according to claim 14, wherein the first creation module is further configured to:
determine a target number of animation windows to be created; and
create a plurality of virtual screens according to the target number, each of the plurality of virtual screens corresponding to one of the animation windows, wherein a content synchronization time difference is set among the plurality of virtual screens.

19. A storage medium, storing computer program executable by a processor of a computer to perform the method according to any one of claims 1 to 13.

20. An electronic device, comprising:
a memory, storing computer program; and
a processor, configured to execute the computer program stored in the memory to perform the method according to any one of claims 1 to 13.
